# EUROPEAN PATENT SPECIFICATION

(11) **EP 2 917 521 B1**
(45) Date of publication and mention of the grant of the patent: **24.07.2019**
(21) Application number: 13786728.9
(22) Date of filing: 31.10.2013
(51) Int. Cl.: F01N 3/022, F01N 3/035, B01J 23/40, B01J 35/04, B01D 53/94, B01J 23/48, B01J 23/63, B01J 37/02, F01N 3/08, F01N 3/10, F01N 3/20

(54) **EXHAUST SYSTEM FOR DIESEL ENGINE COMPRISING CATALYSED SOOT FILTER**
ABGASSYSTEM FÜR DIESELMOTOR MIT KATALYSIERTEM RUSSFILTER
SYSTÈME D'ÉCHAPPEMENT POUR MOTEUR DIESEL AVEC FILTRE À SUIE CATALYSÉ

(30) Priority: 31.10.2012 GB 201219600; 02.11.2012 US 201261721713 P
(43) Date of publication of application: 16.09.2015
(73) Proprietor: Johnson Matthey Public Limited Company, London EC4A 4AB (GB)
(72) Inventor: BROWN, Gavin Michael, Saffron Walden Essex CB10 2EH (GB); CHIFFEY, Andrew Francis, Ware Hertfordshire SG12 9LB (GB); MARVELL, David, Royston Hertfordshire SG8 9UL (GB)
(74) Representative: Nunn, Andrew Dominic
(86) International application number: PCT/GB2013/052851
(87) International publication number: WO 2014/068321

(56) References cited:
- EP-A1- 1 486 248
- EP-A2- 2 505 802
- WO-A1-2004/079167
- WO-A1-2006/031600
- WO-A1-2011/061321
- US-A1- 2010 058 745
- US-B2- 7 922 987

## Description

The present invention relates to an exhaust system comprising a catalysed soot filter for treatment of diesel engine exhaust emissions which removes particulate matter (PM), hydrocarbons (HC) and carbon monoxide (CO) from the exhaust emissions and simultaneously enriches nitrogen dioxide (NO₂) concentration in the oxides of nitrogen (NOₓ) emitted from diesel engines to enable more efficient treatment of such nitrogen oxides.

Vehicular emissions which are the principle pollutants that have negative effects on public health and the natural environment are generally recognised to be carbon monoxide, hydrocarbons, nitrogen oxides (NOₓ) and particulate matter.

Diesel engines run at a high air to fuel ratio under very fuel lean conditions. Because of this they have low levels of emissions of gas phase hydrocarbons and carbon monoxide and are instead characterised by relatively high levels of emissions of NOₓ and particulate matter, relative to the current and agreed future emission regulations set by intergovernmental organisations. The control of particulate matter emissions and of NOx represent significant challenges to the diesel engine manufacturer because they are coupled inversely. Modern passenger vehicles include exhaust gas recirculation. When the engine operates cooler it produces less NOₓ but more particulate matter and conversely at higher temperatures combustion is more complete generating less particulate matter but more NOₓ. Therefore changes in engine design need to be combined with effective trapping and treatment processes to limit the emissions of these harmful pollutants to the atmosphere.

Emission legislation in Europe from 1st September 2014 (Euro 6) maintains the allowable limit set in Euro 5 (which came into force in September 2009 for the approval of vehicles and applied from January 2011 for registration and sales of new types of cars) for the mass of particulate matter emitted from diesel passenger cars of 4.5mg/km as measured by the particulate measurement programme procedure.

However, for Euro 6, all vehicles equipped with a diesel engine will be required substantially to reduce their emissions of nitrogen oxides as soon as Euro 6 enters into force. For example emissions from passenger cars will be capped at 80mg/km which is a reduction of more than 50% as compared to the Euro 5 standards. Furthermore combined emissions of hydrocarbons and nitrogen oxides from diesel vehicles will also be reduced. For example, these will be capped at 170mg/km for passenger cars.

Therefore, the new Euro 6 emission standard presents a number of challenging design problems for meeting diesel emission standards. In particular, how to design a filter, or an exhaust system including a filter, to reduce the NOₓ and combined NOₓ and hydrocarbon emissions, yet at the same time meeting the emission standards for PM pollutants and CO all at an acceptable back pressure, e.g. as measured by maximum on-cycle backpressure on the EU drive cycle.

Ambient particulate matter is typically divided into the following categories based on their aerodynamic diameter (the aerodynamic diameter is defined as the diameter of a 1 g/cm³ density sphere of the same settling velocity in air as the measured particle):
(i) Particles of an aerodynamic diameter of less than 10 µm (PM-10);
(ii) Fine particles of diameter below 2.5 µm (PM-2.5);
(iii) Ultrafine particles of diameter below 100 nm; and
(iv) Nanoparticles of diameter below 50 nm.

Since the mid-1990s, particle size distributions of particulates exhausted from internal combustion engines have received increasing attention due to possible adverse health effects of fine and ultrafine particles. Concentrations of PM-10 particulates in ambient air are regulated by law in the USA. A new, additional ambient air quality standard for PM-2.5 was introduced in the USA in 1997 as a result of health studies that indicated a strong correlation between human mortality and the concentration of fine particles below 2.5 µm.

Interest has now moved to consider ultrafine and nanoparticles generated by diesel and gasoline engines because they are understood to penetrate more deeply into human lungs than particulates of greater size and consequently they are believed to be more harmful than larger particles. This belief is extrapolated from the findings of studies into particulates in the 2.5-10.0 µm range.

Size distributions of diesel particulates have a well-established bimodal character that correspond to the particle nucleation and agglomeration mechanisms, with the corresponding particle types referred to as the nuclei mode and the accumulation mode respectively.

In the nuclei mode, diesel particulate is composed of numerous small particles holding very little mass. Nearly all nuclei mode diesel particulates have sizes of significantly less than 1 µm, i.e. they comprise a mixture of fine, ultrafine and nanoparticles. Nuclei mode particles are believed to be composed mostly of volatile condensates (hydrocarbons, sulphuric acid, nitric acid etc.) and contain little solid material, such as ash and carbon.

Accumulation mode particles are understood to comprise solids (carbon, metallic ash etc.) intermixed with condensates and adsorbed material (heavy hydrocarbons, sulfur species, nitrogen oxide derivatives etc.) Coarse mode particles are not believed to be generated in the diesel combustion process and may be formed through mechanisms such as deposition and subsequent re-entrainment of particulate material from the walls of an engine cylinder, exhaust system, or the particulate sampling system.

The composition of nucleating particles may change with engine operating conditions, environmental condition (particularly temperature and humidity), dilution and sampling system conditions. Laboratory work and theory have shown that most of the nuclei mode formation and growth occur in the low dilution ratio range. In this range, gas to particle conversion of volatile particle precursors, like heavy hydrocarbons and sulphuric acid, leads to simultaneous nucleation and growth of the nuclei mode and adsorption onto existing particles in the accumulation mode. Laboratory tests (see e.g. SAE 980525 and SAE 2001-01-0201) have shown that nuclei mode formation increases strongly with decreasing air dilution temperature but there is conflicting evidence on whether humidity has an influence.

Generally, low temperature, low dilution ratios, high humidity and long residence times favour nanoparticles formation and growth. Studies have shown that nanoparticles consist mainly of volatile material like heavy hydrocarbons and sulphuric acid with evidence of solid fraction only at very high loads.

Particulate collection of diesel particulates in a diesel particulate filter is based on the principle of separating gas-borne particulates from the gas phase using a porous barrier. Diesel particulate filters can be defined as deep-bed filters and/or surface-type filters. In deep-bed filters, the mean pore size of filter media is bigger than the mean diameter of collected particles. The particles are deposited on the media through a combination of depth filtration mechanisms, including diffusional deposition (Brownian motion), inertial deposition (impaction) and flow-line interception (Brownian motion or inertia).

In surface-type filters, the pore diameter of the filter media is less than the diameter of the particulate matter, so particulate matter is separated by sieving. Separation is done by a build-up of collected diesel particulate matter itself, which build-up is commonly referred to as "filtration cake" and the process as "cake filtration".

It is understood that diesel particulate filters, such as ceramic wallflow monoliths, may work through a combination of depth and surface filtration: a filtration cake develops at higher soot loads when the depth filtration capacity is saturated and a particulate layer starts covering the filtration surface. Depth filtration is characterized by somewhat lower filtration efficiency and lower pressure drop than the cake filtration.

Diesel particulate filters have been shown to be extremely effective at removal of particulate matter over the entire particle size range. However these filters have limited capacity for trapping particulate matter before the pressure-drop becomes excessive therefore it is necessary periodically to regenerate the diesel particulate filter. Passive regeneration does not readily take place as combustion of the retained particulate matter in the presence of oxygen requires higher temperatures than those typically provided by diesel engine exhaust. One effective method to lower the combustion temperature of the trapped particulate matter on the diesel particulate filter is addition of a catalysed washcoat to the filter wall. Compositions of catalysed washcoats used are similar to those used in diesel oxidation catalysts and typically comprise at least one platinum group metal. The reactions on the catalysed diesel particulate filter include oxidation of CO and HC and oxidation of NO to NO₂ which enables combustion of the particulate matter at a much lower temperature than in the presence of oxygen.

WO 2006/031600 discloses a catalysed soot filter which simultaneously treats the CO and HC gaseous components and the particulate matter in diesel exhaust gas. The catalysed soot filter, comprises: a wall flow substrate comprising an inlet end, an outlet end, a substrate axial length extending between the inlet end and the outlet end, and a plurality of passages defined by internal walls of the wall flow substrate; wherein the plurality of passages comprise inlet passages having an open inlet end and a closed outlet end, and outlet passages having a closed inlet end and an open outlet end; wherein the internal walls of the inlet passages comprise a first inlet coating that extends from the inlet end to a first inlet coating end, thereby defining a first inlet coating length, wherein the first inlet coating length is less than the substrate axial length; wherein the internal walls of the outlet passages comprise an outlet coating that extends from the outlet end to an outlet coating end, thereby defining an outlet coating length, wherein the outlet coating length is less than the substrate axial length; wherein the sum of the first inlet coating and outlet coating lengths is substantially equal to the substrate axial length; wherein the first inlet coating length defines an upstream zone and the outlet coating length defines a downstream zone; wherein the first inlet coating comprises at least one first inlet platinum group metal component; and, wherein at least 50% of the platinum group metal components are present in the upstream zone. In embodiments, both the inlet and outlet coatings of the catalysed soot filter contain a refractory metal oxide, e.g. alumina, as a support for the platinum group metal components. The refractory metal oxide supports used in the inlet and outlet coating are milled so that 95% of the particles have a diameter of <5 micrometers and preferably <3 micrometers. The wall flow substrates can have a porosity of 60% and a mean pore diameter of about 15-25 micrometers It is also disclosed that the coatings may be disposed as a thin coating on the surface of the internal walls of the wall flow substrate and/or may permeate the porous walls to some extent. However, there is no disclosure of any coating method for obtaining the disclosed CSFs.

WO 2011/061321 discloses another catalysed soot filter comprising a zoned first inlet coating on the internal walls of the inlet passages and a zoned first outlet coating on the internal walls of the outlet passages comprising an oxidation catalyst consisting of a mixture of platinum and palladium.

WO 00/29726 discloses a CSF #6 soot filter based on a Corning cordierite wall flow substrate of dimensions 11.25 inches in diameter x 14.0 inches in length and having a cell density of 100 cells per square inch. CSF #6 soot filter was catalysed with 5.0 g/ft³ Pt, 500 g/ft³ CeO₂ and 150 g/ft³ ZrO₂. These components were applied to the soot filter substrate via solution impregnation with soluble precursors. In addition, a washcoat slurry was applied to one end of the soot filter substrate to a depth (length) of about 4 inches inward from one face of the substrate. This washcoat was comprised of 12.4 wt% Pt on gamma-alumina and was deposited on the one end of the filter substrate to result in a Pt loading of 60.6 g/ft³ equivalent. Thus the total Pt loading on the CSF was 65.6 g/ft³.

A variety of technologies have been explored to reduce NOₓ emitted from diesel exhaust systems to environmentally acceptable nitrogen for release to the atmosphere. Selective NOₓ reduction (lean NOₓ catalyst) using the on-board diesel fuel or a derivative to selectively catalyse the oxidation of HC and NOₓ to CO₂, H₂O and N₂ was extensively investigated and two main candidate materials identified as selective catalysts. However it has been reported in the literature that it is thought that this system will not be sufficient to meet the stringent requirements of Euro 6.

Lean NOₓ traps (also known as NOₓ adsorber catalysts) use a basic metal oxide to adsorb NOₓ during the lean mode of operation. Exhaust gas rich in NO is converted to NO₂ over a platinum group metal-containing catalyst and the NO₂ is trapped and stored on e.g. an alkaline metal oxide which is incorporated within the platinum group metal-containing catalyst. The NO₂ is then desorbed under rich conditions and reduced using rhodium which is also incorporated on the catalyst.

SCR involves use of ammonia in the presence of a suitable catalyst, which ammonia acts as a selective reductant for NOₓ. Typically urea is the source of the ammonia, which hydrolyses in the exhaust system at about 200°C. Suitable catalysts include metal exchanged zeolites and mixed catalysts of vanadium and titanium dioxides. The technology is potentially capable of NOₓ reduction of greater than 90% so it is seen as a good candidate for meeting the new stringent NOx requirements for diesel engines. However the SCR is prone to contamination from HC, CO and particulates which reduces its effectiveness. Furthermore, for many diesel engines, a majority of NOₓ emitted from the exhaust system is in the form of NO, whereas a faster SCR reaction proceeds from a mixture of NO and NO₂. NO₂ is a more reactive compound than NO and the faster SCR reaction can extend the operating temperature of the SCR process to lower temperatures. However, NO₂ reduction *per se* occurs more slowly than NO *per se.* Hence a mixture, particularly a 1:1 mixture of NO:NO₂, of NO:NO₂ is most desirable for efficient NOₓ reduction.

WO 02/14657 discloses an aftertreatment system for lean burn diesel applications configured with a catalysed soot filter upstream of a zeolite SCR to produce substantially better NOₓ conversion performance than the SCR catalyst alone. The catalysed soot filter is coated on the internal walls of the filter substrate with the catalyst being applied by solution impregnation. This application technique suggests that the catalyst is substantially present within the pores of the internal walls of the substrate to minimise increase in exhaust gas back pressure caused by the catalyst as far as possible. The catalyst is coated along the full length of both the inlet channel internal walls and the outlet channel internal walls of the filter substrate. It is mentioned at page 31, lines 28-29 that it may be possible selectively to coat portions of the channels but no further exemplification is provided.

GB 2481057 A discloses a method of treating nitrogen oxides NOx and particulate matter PM comprising the steps of catalytically converting nitrogen monoxide NO to nitrogen dioxide NO₂ using a catalyst composition comprising a manganese oxide and at least one platinum group metal, converting NOx to nitrogen N₂, by contacting a mixture of NO and NO₂ with a nitrogenous reducing agent in the presence of a selective catalytic reduction SCR catalyst, and filtering PM to combust it in NO₂. An exhaust system is also claimed comprising a catalysed soot filter CSF with a portion of its substrate being catalysed and having an SCR downstream of it, where the catalyst on the substrate comprises a manganese oxide and at least one platinum group metal. Where a SCR catalyst is disposed on a substrate downstream from the CSF, the outlet zone of the CSF is less than 45% of the total axial length of the filter substrate.

We have now designed a new catalysed soot filter for treatment of diesel engine exhaust emissions which removes PM, HC and CO from the exhaust emissions and simultaneously enriches NO₂ concentration in NOₓ emitted from a diesel engine to enable more efficient treatment of NOₓ downstream, for example using a SCR catalyst. The catalysed soot filter is based on a wall flow substrate and is designed such that at least the catalyst on downstream channels is substantially coated on, not in, the internal walls of the filter substrate, with different axial coating lengths on the inlet channels and outlet channels, which arrangement has been found to maintain an acceptable exhaust gas back pressure with respect to coating loading and soot trapping and regeneration and has also been found to provide enhanced NO₂ enrichment as compared to filters with coatings substantially or partially "in-wall", such as those prior art catalysed filters discussed hereinabove.

According to a first aspect the invention provides an exhaust system for a diesel engine according to appended claim 1.

Methods of coating wall-flow filter substrates according to the invention include those disclosed in Applicant's WO 99/47260, i.e. a method of coating a monolithic support, comprising the steps of (a) locating a containment means on top of a support, (b) dosing a pre-determined quantity of a liquid component into said containment means, either in the order (a) then (b) or (b) then (a), and (c) by applying pressure or vacuum, drawing said liquid component into at least a portion of the support, and retaining substantially all of said quantity within the support; and WO 2011/080525, i.e. a method of coating a honeycomb monolith substrate comprising a plurality of channels with a liquid comprising a catalyst component, which method comprising the steps of: (i) holding a honeycomb monolith substrate substantially vertically; (ii) introducing a pre-determined volume of the liquid into the substrate via open ends of the channels at a lower end of the substrate; (iii) sealingly retaining the introduced liquid within the substrate; (iv) inverting the substrate containing the retained liquid; and (v) applying a vacuum to open ends of the channels of the substrate at the inverted, lower end of the substrate to draw the liquid along the channels of the substrate.

Washcoat location in a monolith substrate can be influenced by a number of factors. One such factor is the water content of the washcoat. Very generally, the higher the solids content in the washcoat, the less carrier medium is available to transport the solids and the washcoat is more likely to be coated linearly, i.e. on and along a wall surface of the substrate monolith, than to move laterally, i.e. into a porous wall.

For similar reasons, the selection of a porosity for the monolith substrate can also influence the location of the washcoat. Generally, and for a given washcoat, the higher the porosity of the substrate monolith, the more spaces there are for the liquid carrier to go, so the liquid carrier may be removed from the solids in the washcoat more easily and the solids may locate preferentially at the wall surface.

The availability of a carrier medium in a washcoat to transport washcoat solids into a porous wall can also be influenced by rheology modifiers. Rheology modifiers, i.e. thickeners such as xanthan gum, influence how mobile a carrier medium is during coating. A relatively more viscous washcoat, whose viscosity has been increased by addition of a rheology modifier, is more likely to remain a wall surface of a monolith substrate, because the carrier medium is preferentially bound into the washcoat and less available to transport the washcoat solids into a porous wall.

Washcoat solids location can also be influenced by the particle size of the washcoat as expressed by the mean particle size (by volume) (also known as D50) or the D90 (the particle size below which are 90% of the particles in the washcoat): generally for a given filter having a porosity "x" and a mean pore size "y", the smaller the particle size of the washcoat, the more likely the washcoat solids may be transported into a porous wall.

The selection of the filter properties can also influence location. So as mentioned above, decreasing porosity generally predisposes to on-wall rather than in-wall coating. Also as mentioned above, for a washcoat having a given solids content "a", a volumetric mean particle size "b", a volumetric D90 "c" and a rheology "d", by increasing the mean pore size of the monolith substrate, the washcoat is more likely to enter into the porous walls thereof.

"D50" or "D90" or similar references to particle size of a particulate washcoat component herein are to Laser Diffraction Particle Size Analysis using a Malvern Mastersizer 2000, which is a volume-based technique (i.e. D50 and D90 may also be referred to as D_{V}50 and D_{V}90 (or D(v,0.50) and D(v,0.90)) and applies a mathematical Mie theory model to determine a particle size distribution. Diluted washcoat samples should be prepared by sonication in distilled water without surfactant for 30 seconds at 35 watts.

The internal wall surfaces of the outlet channels comprise at least one on-wall outlet coating composition that extends from the outlet end to an outlet coating end wherein the axial outlet coating length is less than the substrate axial length. By "on-wall" it is meant that the coating composition substantially coats the surface of the internal wall and substantially does not penetrate the pores of the internal wall. In addition to the discussion hereinabove, methods of making on-wall coated porous filter substrates include introducing a polymer into the porous structure, applying a washcoat to the substrate and polymer followed by drying and calcining the coated substrate to burn the polymer out. Also methods include controlling the particle size of the washcoat particles such that they are close to or larger than the pore size of the substrate. Such methods include milling and particle size agglomeration through addition of chemical additives. Accordingly, the D50 of the washcoat loading of the at least one outlet coating composition is between 4 and 15µm, such as 5 to 12µm or 7 to 10µm. The D90 particle size of the at least one on-wall outlet coating composition is >15 µm such as from 18 to 40µm, e.g. 20 to 35µm or 25 to 30µm. In certain embodiments, the D50 particle size is 5µm and the corresponding D90 is about 15µm. In another embodiment, where the D50 particle size is 7-10µm, e.g. 7-8µm, the D90 particle size is about 20µm.

The axial outlet coating length is less than the substrate axial length and is from 55 to 90% of the substrate axial length, more preferably from 60 to 85% of the substrate axial length. The axial outlet coating length is greater than the axial inlet coating length. For example the axial outlet coating length can be at least 10% longer than the axial inlet coating length when expressed as a percentage of the total substrate axial length. In embodiments, the axial inlet coating length and the axial outlet coating length together are equal to the axial substrate length.

The at least one on-wall outlet coating composition comprises mixtures of platinum and palladium because the palladium prevents or reduces sintering of the platinum. In order to promote oxidation of NO to NO₂ thereby to increase the NO₂:NOₓ ratio Pt-rich Pt:Pd weight ratios are highly preferred, such as 20:1 to 1:1, optionally 15:1 to 2:1, with 10:1 to 4:1 most preferred.

The at least one catalytically active metal can be present on the outlet wall at a concentration from 1 to 150 g/ft³, more preferably from 5 to 100 g/ft³. The at least one outlet coating composition can comprise a refractory metal oxide, which can be selected from the group consisting of alumina, silica, silica-alumina, alumina-silicates, alumina-zirconia, alumina-chromia, titania, titania-silica, titania-zirconia and titania-alumina. Concentrations of such refractory metal oxides can range from 0.05 to 1.0 g/in³, more preferably from 0.1 to 0.8 g/in³. Refractory metal oxides for use in the present invention can have BET surface areas of at least 20, for example at least 50 m²/g.

In embodiments the at least one outlet coating composition may comprise an optionally stabilised rare earth metal oxide selected from an oxide of cerium, praseodymium, lanthanum, neodymium and samarium. Oxides of cerium are especially preferred. Preferred rare earth metal oxide stabilisers include zirconium. Concentrations of such rare earth metal oxides, if present, range from 50 to 1000 g/ft³, more preferably from 100 to 600 g/ft³. If present, such rare earth metal oxides for use in the present invention can have BET surface areas of at least 20, for example at least 50 m²/g.

In a separate embodiment the at least one outlet coating composition may comprise a combination of at least one refractory metal oxide and an optionally stabilised rare earth metal oxide.

The at least one on-wall outlet coating composition is preferably present at a washcoat loading of 0.1 to 2.0g/in³, more preferably 0.2 to 1.0g/in³.

In embodiments, a thickness of the at least one on-wall outlet coating composition is from 5 to 80µm, preferably 10 to 50µm.

In embodiments, the at least one inlet coating composition can be at least one on-wall inlet coating composition on external surfaces of the internal walls of the plurality of inlet channels; or at least one in-wall coating composition.

In embodiments wherein the at least one inlet coating composition is at least one on-wall inlet coating composition of external surfaces of the internal walls of the plurality inlet channels, the at least one on-wall inlet coating composition can have a mean particle size (D50) of between 4 and 15 µm, such as 5 to 12µm or 7 to 10µm. In embodiments, the at least one on-wall outlet coating composition has a D90 particle size of >15µm, such as from 18 to 40µm e.g. 20 to 35µm or 25 to 30µm. In certain embodiments, the D50 particle size is 5µm and the corresponding D90 is about 15µm. In another embodiment, where the D50 particle size is 7-10µm, e.g. 7-8µm, the D90 particle size is about 20µm.

Alternatively, in embodiments wherein the at least one inlet coating composition is at least one in-wall coating composition, the at least one in-wall inlet coating composition has a mean particle size (D50) of 1 to 3µm. In such embodiments, the at least one in-wall inlet coating composition has a D90 particle size of 4 to 6µm.

The axial inlet coating length is less than both the substrate axial length and the axial outlet coating length. Preferably the axial inlet coating length is from 10 to 45% of the substrate axial length, more preferably from 15 to 40% of the substrate axial length. In embodiments, the axial inlet coating length is from 10 to 30% of the substrate axial length.

The at least one inlet coating composition comprises a mixture of both platinum and palladium. The presence of palladium can reduce sintering of the platinum component. According to the invention, it is less important for the inlet coating composition to oxidise NO to NO₂ because the outlet coating composition is designed for this purpose. Hence, catalyst compositions that contribute to soot combustion are preferred for the inlet coating composition, e.g. compositions comprising an optionally stabilised rare earth metal oxide, such as cerium oxide stabilised with zirconium, although some NO₂ generated on the inlet coating composition may be reduced back to NO after passively combusting soot trapped in the inlet channels (NO₂ + C → NO + CO). However, catalyst compositions that contribute to NO oxidation in the inlet coating composition can reduce a Pt:Pd weight ratio in outlet coating composition. Accordingly, suitable Pt:Pd weight ratios for the inlet coating compositions are less than for outlet coating compositions, such as a Pt:Pd weight ratio of 20:1 to 1:10, such as 15:1 to 1:2, most preferably 10:1 to 2:1.

The at least one catalytically active metal can be present on the inlet wall at a concentration of from 1 to 150 g/ft³, more preferably from 5 to 100 g/ft³.

The at least one inlet coating composition may comprise a refractory metal oxide selected from the group consisting of alumina, silica, silica-alumina, alumina-silicates, alumina-zirconia, alumina-chromia, titania, titania-silica, titania-zirconia and titania-alumina. Concentrations of such refractory metal oxides, if present, range from 0.05 to 1.0 g/in³, more preferably from 0.1 to 0.8 g/in³. If present, such refractory metal oxides have BET surface areas of at least 20 m²/g, for example at least 50 m²/g.

In an alternative embodiment the at least one inlet coating composition may comprise an optionally stabilised rare earth metal oxide selected from an oxide of cerium, praseodymium, lanthanum, neodymium and samarium. Oxides of cerium are especially preferred. Preferred rare earth metal oxide stabilisers include zirconium. Concentrations of such rare earth metal oxides, if present, can range from 50 to 1000 g/ft³, more preferably from 100 to 600 g/ft³ and they have BET surface areas of at least 20m²/g, for example at least 50 m²/g.

In a separate embodiment the at least one inlet coating composition may comprise a combination of both at least one refractory metal oxide and an optionally stabilised rare earth metal oxide.

The at least one on-wall inlet coating composition is preferably present at a washcoat loading of 0.1 to 2.0g/in³, more preferably 0.2 to 1.0g/in³.

In one embodiment the coating composition on the inlet wall comprises the same ingredients as the coating composition on the outlet wall. In one scenario these same ingredients are present at the same concentration in each coating composition.

In all embodiments the surface porosity of the washcoat can be increased by including voids therein. By "void" herein is meant a space existing in the layer defined by solid washcoat material. Voids can include any vacancy, fine pore, tunnel-state, slit and can be introduced by including in a washcoat composition for coating on the porous substrate a material that is combusted during calcination of a coated porous filter substrate, for example chopped cotton or materials to give rise to pores made by formation of gas on decomposition or combustion. The average void of the washcoat can be from 5 to 80% with the average void diameter from 0.1 to 1000 µm. Inclusion of the voids is used to compensate for any increase in backpressure as the coating is on-wall.

Wall flow substrates for use in the present invention are composed of ceramic or ceramic like materials. Examples of ceramic or ceramic like materials include corderite, α-alumina, silicon carbide, silicon nitride, zirconia, mullite, spodumene, alumina-silica-magnesia or zirconium silicate. Most preferably the wall flow substrate is composed of cordierite and silicon carbide.

The wall flow substrate is a porous substrate which has surface pores of a mean pore size. Mean pore size can be determined by mercury porosimetry. The mean pore size is from 4 to 40 µm, for example 6 to 35 µm, 7 to 30µm or 9 to 25µm. Porosity is a measure of the percentage of void space in a porous substrate and is related to backpressure in an exhaust system: generally, the lower the porosity, the higher the backpressure. The ceramic or ceramic like materials of the invention have a porosity of from 35 to 75 %, preferably from 38 to 70%, especially 40 to 65%.

The wall flow substrate has a plurality of fine, substantially parallel gas flow channels extending along the longitudinal axis of the substrate. Each channel is blocked at one end of the substrate with alternate channels blocked at opposite ends of the substrate. The wall flow substrate may contain up to 500 channels (cells) per square inch (cpsi) of cross section. Preferably the substrate has from 150 to 400 cpsi of cross section that can be rectangular, square, circular, oval, triangular or hexagonal. Preferably the cross section is square. The substrate can have a wall thickness of from 6 to 22mil (thousandths of an inch), preferably 8 to 18 mil.

NOₓ exhaust gases exiting the catalysed soot filter have an increased percentage of NO₂ as compared to NOₓ gases entering the catalysed soot filter. The ratio of NO₂:NO on entering the catalysed soot filter is typically between 5:95 to 40:60 for exhaust emissions from a diesel engine. The ratio of NO₂:NO on exiting the catalysed soot filter is increased relative to that entering the inlet and is preferably between 10:90 to 90:10, such as 30:70 to 70:30, most preferably 40:60 to 60:40. This is because a 1:1 ratio of NO₂:NO is preferred for promoting the fast NOx reduction reactions described hereinabove.

Without wishing to be bound by theory it is believed that the careful choice and positioning of inlet coating and the outlet on-wall coating means that substantially all of soot/PM emitted from the diesel engine is trapped by both the wallflow filter substrate on the inlet wall and the on-wall inlet coating. The catalytic coating composition on the inlet wall oxidises some of the NO that is emitted from the diesel engine to NO₂. Passive regeneration of the filter occurs in the presence of NO₂. During the regeneration process the particulate matter is oxidised and the NO₂ is converted back to NO. This NO and any residual NO₂ passes through the porous substrate and through the outlet wall coating where some of the NO is oxidised to NO₂. There is negligible PM on the outlet wall so this NO₂ is not required for any further passive regeneration and passes through the outlet wall with the residual NO. Hence the NOₓ exiting the system has a higher percentage of NO₂ than that entering the system. The coating compositions also oxidise the small quantities of CO and HC emitted from the exhaust. CO and HC are preferentially oxidised before NO. Hence, by using a higher Pt:Pd weight ratio for the outlet coating composition than the inlet coating composition, NO oxidation occurs more efficiently, because much less HC, CO and PM are present in exhaust gas present in the outlet channels of the catalysed soot filter. Promoting NO oxidation activity at higher Pt:Pd weight ratios on the inlet coating composition is a less efficient use of the expensive precious metals such as platinum and palladium.

As discussed earlier SCR involves use of ammonia in the presence of a suitable catalyst which acts as a selective reductant for NOₓ. SCR as a treatment is prone to contamination from HC, CO and PM which reduces its effectiveness. Often a majority of NOₓ emitted from the exhaust system is NO whereas it has been shown previously that fast reaction kinetics for the SCR reaction are for a combination of NO and NO₂ in a 50:50 ratio. NO₂ is the more reactive compound from NOₓ and hence its presence can extend the operating temperature of the SCR to lower temperatures.

The treatment of emissions from diesel engines by the catalytic soot filter of the invention can result in the removal of PM, HC and CO and the conversion of some of the NO in NOₓ emitted from the engine into NO₂. Therefore, the exhaust gas emitted from the catalytic soot filter can promote the SCR reaction thereby to reduce NOₓ and meet the more stringent Euro 6 NOₓ emission regulations.

According to a second aspect, the invention provides an exhaust system for a diesel engine comprising the catalysed soot filter of the invention and a selective catalytic reduction catalyst disposed downstream of the catalysed soot filter.

Ammonia is typically used as the reducing agent in the SCR reaction. The exhaust system according to the second aspect preferably comprises means, when in use, for introducing a reducing agent precursor into exhaust gas upstream of the SCR catalyst. For example urea water is typically used as a reducing agent precursor and may be sprayed into exhaust gas upstream of a SCR catalyst via a nozzle. It is then thermally or hydrolytically resolved to liberate ammonia. In a preferred embodiment, the means for introducing a reducing agent precursor into exhaust gas upstream of the SCR catalyst includes a source of ammonia, such as a tank of urea.

In a preferred embodiment the SCR catalyst is coated onto a flow through substrate. Flow through substrates for use with the SCR catalyst in the present invention are preferably composed of ceramic or ceramic like materials or of refractory metals. Examples of ceramic or ceramic-like materials include cordierite, α-alumina, silicon carbide, silicon nitride, zirconia, mullite, spodumene, alumina-silica-magnesia or zirconium silicate. Examples of refractory metals include stainless steel. Most preferably the flow through substrate is composed of ceramic or ceramic like materials especially cordierite and silicon carbide.

The flow-through substrate is a flow-through monolith preferably having a honeycomb structure with a plurality of small, parallel thin-walled channels running axially through the substrate and extending throughout the substrate, i.e. from an open inlet end to an open outlet end. The channel cross-section of the substrate may be any shape, but is preferably square, sinusoidal, triangular, rectangular, hexagonal, trapezoidal, circular, or oval.

The SCR catalyst is preferably comprises titanium dioxide, vanadium pentoxide, tungstic trioxide, molybdenum trioxide, silicon dioxide, zeolite, zeolite in combination with, e.g. ion-exchanged with, a base metal component such as Fe or preferably Cu, and combinations thereof. A particularly preferred SCR catalyst comprises a copper-exchanged CHA zeolite.

The SCR catalyst composition can be coated at a concentration of at least 0.5 g/in³ and preferably from 1.0 to 3.0 g/in³

The SCR catalyst selectively reduces and purges NOₓ contained in exhaust gas and transforms it into nitrogen and water, which have less impact on the environment.

In a further embodiment of the exhaust system according to the present invention an oxidation catalyst is disposed downstream of the SCR catalyst to ensure against any ammonia slip. By "downstream" we mean either that the oxidation catalyst is coated on the trailing edge of the flow through substrate of the SCR catalyst, or that the oxidation catalyst is coated on a separate substrate monolith from the SCR catalyst.

In an alternative embodiment the second aspect of the present invention provides an emission treatment system for a diesel engine comprising the catalysed soot filter of the invention and a lean NOₓ trap (LNT) catalyst disposed downstream of the catalysed soot filter.

A typical LNT catalyst is coated on a flow through monolith substrate. The LNT catalyst typically includes a NOₓ adsorbent, usually an alkaline earth metal oxide, for the storage/trapping of NOₓ and an oxidation/reduction catalyst. The oxidation/reduction catalyst generally comprises one or more noble metals, preferably platinum, palladium, and/or rhodium. Typically, platinum is included to perform the oxidation function and rhodium is included to perform the reduction function.

In a further embodiment of the invention a diesel oxidation catalyst (DOC) is disposed upstream of the catalytic soot filter of the first aspect of the present invention.

The DOC composition typically comprises at least one platinum group metal dispersed on a refractory metal oxide, a reducible metal oxide or any combination of two or more thereof as a support. Such a DOC is formed on a ceramic or metallic monolith substrate upon which one or more catalyst coating compositions may be deposited, whether in a zoned arrangement, i.e. a first, upstream zone of a first DOC catalyst composition; and a second, downstream zone of a second DOC catalyst composition; or a layered arrangement.

In this embodiment the DOC is able to oxidise NO, present in the NOₓ emitted from the diesel engine, to NO₂ before the exhaust emissions enter the catalysed soot filter. Therefore, in this embodiment the inlet coating length can be substantially reduced in the catalytic soot filter, for example to 10 to 30% of the substrate axial coating length.

According to a further aspect, the invention provides a method of increasing NO₂/NOₓ ratio % in a diesel exhaust gas comprising NOₓ for downstream processes, which method comprising contacting the exhaust gas with a catalysed soot filter according to the first aspect of the present invention or an exhaust system according to the second aspect of the present invention.

In a preferred embodiment, the downstream process comprises the selective catalytic reduction of oxides of nitrogen using a SCR catalyst and a nitrogenous reductant.

In order that the invention may be more fully understood, the following embodiment and Examples will now be described by way of illustration only and with reference to the accompanying drawings, in which:

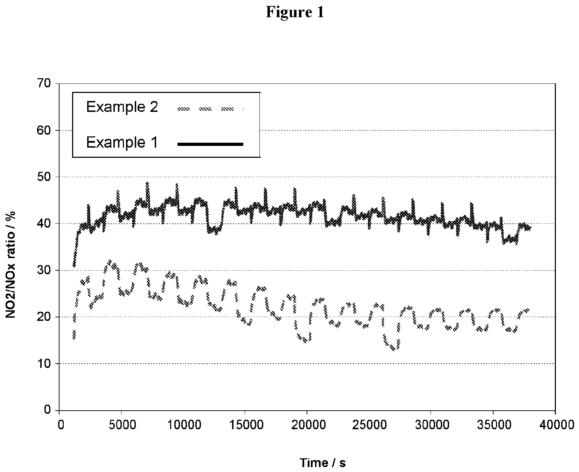

Figure 1 is a graph showing the percentage of NO₂ in NOₓ emitted from a catalytic soot filter of the invention (where a majority of catalyst coating composition is on the outlet wall) and for a comparative catalytic soot filter (where a majority of the catalyst coating is on the inlet wall) over time as the soot loading on the catalytic soot filter is increased.

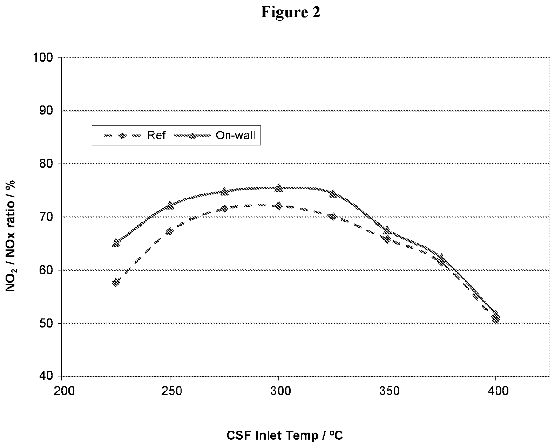

Figure 2 is a graph showing the percentage of NO₂ in NOₓ emitted from a catalytic soot filter (CSF) according to the invention wherein the catalyst coating composition is on-wall and for a comparative catalytic soot filter where the catalyst coating composition is in-wall, wherein in both cases there is a DOC coated on a separate monolith substrate disposed upstream of the catalytic soot filter; and

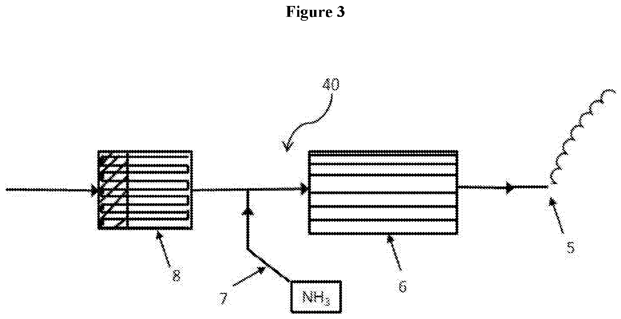

Figure 3 shows a schematic drawing of an exhaust system according to the present invention.

Referring to Figure 3, there is shown an exhaust system 40 for a diesel engine according to the present invention comprising a catalysed soot filter according to the present invention 8 having a Pt/Pd inlet channel coating which extends axially for 35% of a total axial substrate length from the open inlet channel ends and an axial outlet channel coating of the same Pt/Pd coating as the inlet channels that extends for 65% from the open outlet channel ends. Downstream of the outlet end of the catalysed soot filter is means for injecting a nitrogenous reductant (represented by the chemical nomenclature for ammonia, i.e. NH₃), e.g. an ammonia precursor urea, into exhaust gas upstream of a SCR catalyst 6. SCR catalyst 6 is a CuCHA SCR catalyst, which is coated on a flow through substrate monolith. An outlet surface of the flow through substrate monolith comprising the SCR catalyst can comprise a catalyst for oxidising NH₃ which slips past the SCR catalyst to N₂, such as a 3g/ft³ Pt/alumina catalyst disposed in a layer below the CuCHA catalyst. Exhaust gas emitted from a downstream end of the SCR flow through substrate monolith is exhausted to atmosphere at tail pipe 5.

### EXAMPLES

### Example 1 (not according to the invention)

A catalysed soot filter was prepared by coating a silicon carbide wallflow substrate of 5.66 inches (14.38cm) diameter by 8 inches (20.32cm) length having 300 cells per square inch (cpsi), 58% porosity and 22 µm pore size. Using established CSF coating techniques, 80% of the coating was applied over 80% of the substrate's axial length from the outlet end of the outlet channels and 20% of the coating was over 20% of the substrate's axial length from the inlet end of the inlet channels. The coating slurry comprised of platinum and palladium in a weight ratio of 10:1 supported on an alumina carrier. The filter was then oven aged in air at 750°C for 5 hrs.

The platinum/palladium is present at a concentration of 10g/ft³ and the on-wall coating composition has a washcoat loading of 0.55g/in³ for both the inlet and outlet, with a D50 of less than or equal to 10 µm.

### Example 2

A comparative catalysed soot filter was prepared by coating the same silicon carbide wallflow substrate as used in Example 1 with the same coating as is described in Example 1, except in that 80% of the coating was applied over 80% of the substrate's axial length of the inlet channels from the inlet ends thereof and 20% of the coating was applied over 20% of the substrate's axial length from the outlet end of the outlet channels.

### Example 3

Both catalysed soot filters of Example 1 and Example 2 were exposed to exhaust emissions from a 2.0 litre turbo charged diesel bench engine using diesel fuel with 50ppm sulphur content running a repeated transient cycle over a ten hour period, with a maximum catalysed soot filter inlet temperature of about 310 to 315°C.

Figure 1 shows the percentage of NO₂ in the NOₓ emitted from the catalysed soot filters of Example 1 and Example 2. It is clear from the results shown for Example 1 that when the coating composition is mostly present on the outlet wall there is a higher percentage of NO₂ in the NOₓ exiting the catalysed soot filter. Furthermore, the percentage of NO₂ exiting the catalysed soot filter is much more stable than that when the coating composition is mostly present on the inlet wall.

Figure 1 clearly shows that diesel exhaust gas exiting the catalysed soot filter of the invention has the preferred composition of NO₂/NO of total NOₓ for effective treatment of the NOₓ emissions by, for example, a downstream SCR catalyst.

### Example 4 (not according to the invention)

A catalysed soot filter was prepared by coating a silicon carbide wallflow substrate of 3.0 litres volume having 300 cpsi, 42% porosity and 14µm pore size with platinum/palladium in a weight ratio of 10:1 supported on alumina coating composition. The filter was then oven-aged in air at 750°C for 10 hrs.

The platinum/palladium is present at a concentration of 50g/ft³ on 30% of the axial length of the inlet channel walls from the inlet end with a washcoat loading of 0.35g/in³ and a D50 of between 7 and 8µm. The outlet channel walls are coated along 70% of their axial length from the outlet end with the platinum/palladium coating composition at a concentration of 50g/ft³ with a washcoat loading of 0.20g/in³, with a D50 of between 7 and 8µm.

### Example 5

A diesel oxidation catalyst was prepared by coating a ceramic flow through substrate of 4.66 inches (11.84cm) diameter by 5.7inches (14.48cm) length with platinum/palladium in a weight ratio of 2:1 supported on an alumina coating composition. The diesel oxidation catalyst was then oven aged in air at 750°C for 25 hrs.

The platinum/palladium is present at a concentration of 60g/ft³ with a washcoat loading of 3.1g/in³.

### Example 6

A comparative catalysed soot filter was prepared by coating a silicon carbide wallflow substrate as per Example 1 with platinum/palladium in a weight ratio of 10:1 supported on alumina coating composition. The inlet channels were coated with 80% of the coating composition over 80% of the substrate's axial length from the inlet ends thereof and 20% of the coating composition was coated over 20% of the substrate's axial length from the outlet end. The filter was then oven aged at 750°C for 10 hrs.

The platinum/palladium was present at a concentration of 50g/ft³ with a washcoat loading of 0.35g/in³, with a D50 of about 2.5µm for both inlet and outlet coating compositions. The D50 of 2.5 µm is indicative of in wall coating.

### Example 7

Both catalysed soot filters of Example 4 and Example 6 were exposed to exhaust emissions from a 2.4 litre turbo charged diesel bench engine test. In both cases the DOC of Example 5 was positioned upstream of the catalytic soot filter. The engine was run in such a way as to obtain a sequential temperature increase in 25°C intervals from 225 to 400°C and the temperature was held at each step for 10 minutes after each temperature increase. Emissions measurements were recorded downstream of the CSF at each temperature point and the results are shown in Figure 2.

Figure 2 shows that the exhaust system comprising the comparative catalysed soot filter of Example 6 (labelled "Ref' in the Figure) has a lower NO₂/NOₓ ratio % up to about 350°C compared with the exhaust system comprising the catalysed soot filter according to the invention of Example 4. At about 350°C and above, the oxidation of NO to NO₂ is thermodynamically limited, as is well known in the art. It follows that for applications which require an increased NO₂/NOₓ ratio %, the exhaust system comprising the soot filter of Example 6 is preferred.

## Claims

1. An exhaust system for a diesel engine comprising a catalysed soot filter for increasing the percentage of NO₂ of total NOₓ in exhaust gas exiting the catalysed soot filter relative to the percentage of NO₂ of total NOₓ in exhaust gas entering the catalysed soot filter and a selective catalytic reduction catalyst disposed downstream of the catalysed soot filter, wherein the catalysed soot filter comprises a ceramic or ceramic-like wall flow substrate having a mean pore size from 4 to 40 µm and a porosity of from 35 to 75 % and comprising an inlet end, an outlet end, a substrate axial length extending between the inlet end and the outlet end, and a plurality of channels defined by internal walls of the wall flow substrate, wherein the plurality of channels comprise a plurality of inlet channels having an open inlet end and a closed outlet end and a plurality of outlet channels having a closed inlet end and an open outlet end, wherein surfaces of the internal walls of the plurality of inlet channels comprise a washcoat of at least one inlet coating composition comprising at least one refractory metal oxide, an optionally stabilised rare earth metal oxide or a mixture of at least one refractory metal oxide and an optionally stabilised rare earth metal oxide and both the catalytically active metals platinum and palladium, which at least one inlet coating composition extends for an axial inlet coating length from the open inlet end to a downstream inlet coating end, wherein the axial inlet coating length is less than the substrate axial length, wherein external surfaces of the internal walls of the plurality of outlet channels comprise a washcoat of at least one on-wall outlet coating composition comprising at least one refractory metal oxide, an optionally stabilised rare earth metal oxide or a mixture of at least one refractory metal oxide and an optionally stabilised rare earth metal oxide and both the catalytically active metals platinum and palladium, which at least one on-wall outlet coating composition having a mean particle size (D50) of between 4 and 15 µm and a D90 particle size >15 µm and extending for an axial outlet coating length from an upstream outlet end to the open outlet end, wherein the axial outlet coating length is 55 to 90 % of the substrate axial length wherein the axial outlet coating length is greater than the axial inlet coating length, wherein the at least one on-wall outlet coating composition has a thickness from 5 to 80µm and comprises both platinum and palladium at a Pt:Pd weight ratio of 20:1 to 1:1, wherein the at least one inlet coating composition comprises both platinum and palladium at a Pt:Pd weight ratio of 20:1 to 1:10 and wherein the Pt:Pd weight ratio in the at least one inlet coating is less than the Pt:Pd weight ratio in the outlet coating.

2. An exhaust system according to claim 1, wherein the at least one on-wall outlet coating composition is present at a washcoat loading of 0.1 to 2.0 g/in³.

3. An exhaust system according to claim 1 or 2, wherein the at least one inlet coating composition is at least one on-wall inlet coating composition on external surfaces of the internal walls of the plurality of inlet channels or at least one in-wall coating composition.

4. An exhaust system according to any preceding claim, wherein the axial inlet coating length is from 10 to 45 % of the substrate axial length.

5. An exhaust system according to any preceding claim, wherein the coating composition on the surfaces of the inlet channel internal walls comprises the same ingredients as the coating composition on the external surfaces of the outlet channel internal walls.

6. An exhaust system according to any preceding claim, wherein the axial outlet coating length is at least 10% longer than the axial inlet coating length when expressed as a percentage of the total substrate axial length or wherein the axial inlet coating length and the axial outlet coating length together are substantially equal to the axial substrate length.

7. An exhaust system according to any preceding claim, wherein a diesel oxidation catalyst is disposed upstream of the catalytic soot filter.

8. An exhaust system according to claim 7 when appendant on claim 4, wherein the axial inlet coating length in the catalysed soot filter is from 10 to 30 % of the substrate axial length.

9. A method of increasing NO₂/NOₓ ratio % in a diesel exhaust gas comprising NOₓ for downstream processes, which method comprising contacting the exhaust gas with an exhaust system according to any preceding claim.

## Patentansprüche

1. Abgassystem für einen Dieselmotor, umfassend einen katalysierten Rußfilter zum Erhöhen des NO₂ am gesamten NOₓ im Abgas, das aus dem katalysierten Rußfilter austritt, bezogen auf den NO₂-Anteil am gesamten NOₓ im Abgas, das in den katalysierten Rußfilter eintritt, und einen selektiven katalytischen Reduktionskatalysator, der nachgelagert zum katalysierten Rußfilter angeordnet ist, wobei der katalysierte Rußfilter ein keramisches oder keramikähnliches Wandströmungssubstrat mit einer mittleren Porengröße von 4 bis 40 µm und einer Porosität von 35 bis 75% sowie ein Einlassende, ein Auslassende und eine axiale Länge des Substrats umfasst, die sich zwischen dem Einlassende und dem Auslassende erstreckt, und eine Vielzahl von Kanälen, die durch Innenwände des Wandströmungssubstrats definiert sind, wobei die Vielzahl von Kanälen eine Vielzahl von Einlasskanälen mit einem offenen Einlassende und einem geschlossenen Auslassende und eine Vielzahl von Auslasskanälen mit einem geschlossenen Einlassende und einem offenen Auslassende umfasst, wobei Oberflächen der Innenwände der Vielzahl von Einlasskanälen einen Washcoat aus mindestens einer zusammengesetzten Beschichtung des Einlasses umfassen, die mindestens ein feuerfestes Metalloxid, ein optional stabilisiertes Seltenerd-Metalloxid oder eine Mischung aus mindestens einem feuerfesten Metalloxid und einem optional stabilisierten Seltenerd-Metalloxid und sowohl die katalytisch aktiven Metalle Platin als auch Palladium umfasst, wobei sich mindestens eine zusammengesetzte Beschichtung des Einlasses für eine axiale Länge der Beschichtung des Einlasses vom offenen Einlassende bis zu einem nachgelagerten beschichteten Einlassessende erstreckt, wobei die axiale Länge der Beschichtung des Einlasses kleiner als die axiale Länge des Substrats ist, wobei die Außenflächen der Innenwände der Vielzahl von Auslasskanälen einen Washcoat aus mindestens einer wandseitigen zusammengesetzten Beschichtung des Auslasses umfassen, die mindestens ein feuerfestes Metalloxid, ein gegebenenfalls stabilisiertes Seltenerd-Metalloxid oder eine Mischung aus mindestens einem feuerfesten Metalloxid und einem gegebenenfalls stabilisierten Seltenerd-Metalloxid sowie sowohl die katalytisch aktiven Metalle Platin als auch Palladium umfasst, wobei mindestens eine wandseitige zusammengesetzte Beschichtung des Auslasses eine mittlere Partikelgröße (D50) zwischen 4 und 15 µm und eine D90-Partikelgröße >15 µm aufweist, die sich für eine axiale Länge der Beschichtung des Auslasses von einem vorgelagerten Auslassende bis zum offenen Auslassende erstreckt, wobei die axiale Länge der Beschichtung des Auslasses 55 bis 90 % der axialen Länge des Substrats beträgt, wobei die axiale Länge der Beschichtung des Auslasses größer als die axiale Länge der Beschichtung des Einlasses ist, wobei die mindestens eine wandseitige zusammengesetzte Beschichtung des Auslasses eine Dicke von 5 bis 80 µm aufweist und sowohl Platin als auch Palladium in einem Pt:Pd-Gewichtsverhältnis von 20:1 bis 1:1 umfasst, wobei die mindestens eine zusammengesetzte Beschichtung des Einlasses sowohl Platin als auch Palladium in einem Pt:Pd-Gewichtsverhältnis von 20:1 bis 1:10 umfasst und wobei das Pt:Pd-Gewichtsverhältnis in der mindestens einen Beschichtung des Einlasses kleiner ist als das Pt:Pd-Gewichtsverhältnis in der Beschichtung des Auslasses.

2. Abgassystem nach Anspruch 1, wobei die mindestens eine wandseitige zusammengesetzte Beschichtung des Auslasses bei einer Washcoat-Ladung von 0,1 bis 2,0 g/in³ vorhanden ist.

3. Abgassystem nach Anspruch 1 oder 2, wobei die mindestens eine zusammengesetzte Beschichtung des Einlasses mindestens eine wandseitige zusammengesetzte Beschichtung des Einlasses auf Außenflächen der Innenwände der Vielzahl von Einlasskanälen oder mindestens eine wandseitige zusammengesetzte Beschichtung ist.

4. Abgassystem nach einem der vorhergehenden Ansprüche, wobei die axiale Länge der Beschichtung des Einlasses 10 bis 45% der axialen Länge des Substrats beträgt.

5. Abgassystem nach einem der vorhergehenden Ansprüche, wobei die zusammengesetzte Beschichtung auf den Oberflächen der Innenwände des Einlasskanals die gleichen Bestandteile wie die zusammengesetzte Beschichtung auf den Außenflächen der Innenwände des Auslasskanals umfasst.

6. Abgassystem nach einem der vorhergehenden Ansprüche, wobei die axiale Länge der Beschichtung des Auslasses mindestens 10% länger als die axiale Länge der Beschichtung des Einlasses ist, wenn sie als Prozentsatz der gesamten axialen Länge des Substrats ausgedrückt wird, oder wobei die axiale Länge der Beschichtung des Einlasses und die axiale Länge der Beschichtung des Auslasses zusammen im Wesentlichen gleich der axialen Länge des Substrats sind.

7. Abgassystem nach einem der vorhergehenden Ansprüche, wobei ein Dieseloxidationskatalysator vorgelagert zum katalytischen Rußfilter angeordnet ist.

8. Abgassystem nach Anspruch 7, wenn abhängig von Anspruch 4, wobei die axiale Länge der Beschichtung des Einlasses in dem katalysierten Rußfilter 10 bis 30% der axialen Länge des Substrats beträgt.

9. Verfahren zum Erhöhen des NO₂/NOₓ-Verhältnisses in Prozent in einem NOₓ umfassenden Dieselabgas für nachgelagerte Prozesse, wobei das Verfahren das Kontaktieren des Abgases mit einem Abgassystem gemäß einem vorhergehenden Anspruch umfasst.

## Revendications

1. Système d'échappement pour un moteur diesel comprenant un filtre à suie catalysé pour augmenter le pourcentage de NO₂ du total des NOₓ dans le gaz d'échappement sortant du filtre à suie catalysé par rapport au pourcentage de NO₂ du total des NOₓ dans le gaz d'échappement entrant dans le filtre à suie catalysé et un catalyseur de réduction catalytique sélective disposé en aval du filtre à suie catalysé, dans lequel le filtre à suie catalysé comprend un substrat à écoulement sur paroi en céramique ou analogue de céramique ayant une taille de pore moyenne allant de 4 à 40 µm et une porosité allant de 35 à 75 % et comprenant une extrémité d'entrée, une extrémité de sortie, une longueur axiale de substrat s'étendant entre l'extrémité d'entrée et l'extrémité de sortie, et une pluralité de canaux définis par les parois internes du substrat à écoulement sur paroi, dans lequel la pluralité de canaux comprend une pluralité de canaux d'entrée ayant une extrémité d'entrée ouverte et une extrémité de sortie fermée et une pluralité de canaux de sortie ayant une extrémité d'entrée fermée et une extrémité de sortie ouverte, dans lequel les surfaces des parois internes de la pluralité de canaux d'entrée comprennent une couche lavis d'au moins une composition de revêtement d'entrée comprenant au moins un oxyde de métal réfractaire, un oxyde de métal des terres rares facultativement stabilisé ou un mélange d'au moins un oxyde de métal réfractaire et d'un oxyde de métal des terres rares facultativement stabilisé et à la fois les métaux catalytiquement actifs platine et palladium, laquelle au moins une composition de revêtement d'entrée s'étend sur une longueur de revêtement d'entrée axiale allant de l'extrémité d'entrée ouverte à une extrémité de revêtement d'entrée en aval, dans lequel la longueur de revêtement d'entrée axiale est inférieure à la longueur axiale de substrat, dans lequel les surfaces externes des parois internes de la pluralité de canaux de sortie comprennent une couche lavis d'au moins une composition de revêtement de sortie sur paroi comprenant au moins un oxyde de métal réfractaire, un oxyde de métal des terres rares facultativement stabilisé ou un mélange d'au moins un oxyde de métal réfractaire et d'un oxyde de métal des terres rares facultativement stabilisé et à la fois les métaux catalytiquement actifs platine et palladium, laquelle au moins une composition de revêtement de sortie sur paroi ayant une taille de particule moyenne (D50) comprise entre 4 et 15 µm et une taille de particule D90 > 15 µm et s'étendant sur une longueur de revêtement de sortie axiale allant d'une extrémité de sortie en amont à l'extrémité de sortie ouverte, dans lequel la longueur de revêtement de sortie axiale va de 55 à 90 % de la longueur axiale de substrat dans lequel la longueur de revêtement de sortie axiale est supérieure à la longueur de revêtement d'entrée axiale, dans lequel l'au moins une composition de revêtement de sortie sur paroi a une épaisseur allant de 5 à 80 µm et comprend à la fois du platine et du palladium à un rapport en poids Pt:Pd de 20:1 à 1:1, dans lequel l'au moins une composition de revêtement d'entrée comprend à la fois du platine et du palladium à un rapport en poids Pt:Pd de 20:1 à 1:10 et dans lequel le rapport en poids Pt:Pd dans l'au moins un revêtement d'entrée est inférieur au rapport en poids Pt:Pd dans le revêtement de sortie.

2. Système d'échappement selon la revendication 1, dans lequel l'au moins une composition de revêtement de sortie sur paroi est présente à une charge de couche lavis de 0,1 à 2,0 g/pouce³.

3. Système d'échappement selon la revendication 1 ou la revendication 2, dans lequel l'au moins une composition de revêtement d'entrée est au moins une composition de revêtement d'entrée sur paroi sur les surfaces externes des parois internes de la pluralité de canaux d'entrée ou au moins une composition de revêtement dans paroi.

4. Système d'échappement selon l'une quelconque des revendications précédentes, dans lequel la longueur de revêtement d'entrée axiale va de 10 à 45 % de la longueur axiale de substrat.

5. Système d'échappement selon l'une quelconque des revendications précédentes, dans lequel la composition de revêtement sur les surfaces des parois internes de canaux d'entrée comprend les mêmes ingrédients que la composition de revêtement sur les surfaces externes des parois internes de canaux de sortie.

6. Système d'échappement selon l'une quelconque des revendications précédentes, dans lequel la longueur de revêtement de sortie axiale est au moins 10 % plus longue que la longueur de revêtement d'entrée axiale lorsqu'elle est exprimée sous la forme d'un pourcentage de la longueur axiale de substrat totale ou dans lequel la longueur de revêtement d'entrée axiale et la longueur de revêtement de sortie axiale sont ensemble substantiellement égales à la longueur de substrat axiale.

7. Système d'échappement selon l'une quelconque des revendications précédentes, dans lequel un catalyseur d'oxydation diesel est disposé en amont du filtre à suie catalytique.

8. Système d'échappement selon la revendication 7 lorsqu'elle dépend de la revendication 4, dans lequel la longueur de revêtement d'entrée axiale dans le filtre à suie catalysé va de 10 à 30 % de la longueur axiale de substrat.

9. Procédé d'augmentation du rapport en % NO₂/NOₓ dans un gaz d'échappement diesel comprenant des NOₓ pour des procédés en aval, lequel procédé comprenant la mise en contact du gaz d'échappement avec un système d'échappement selon l'une quelconque des revendications précédentes.
